# EUROPEAN PATENT SPECIFICATION

(11) **EP 3 614 129 B1**
(45) Date of publication and mention of the grant of the patent: **27.12.2023**
(21) Application number: 18788098.4
(22) Date of filing: 11.04.2018
(51) Int. Cl.: G01N 21/552, G02B 5/04

(54) **TOTAL INTERNAL REFLECTION OPTICAL MEMBER, AND TOTAL INTERNAL REFLECTION MEASURING DEVICE PROVIDED WITH SAME**
OPTISCHES TOTALREFLEXIONSELEMENT UND DAMIT AUSGESTATTETE VORRICHTUNG ZUR MESSUNG DER TOTALREFLEXION
ÉLÉMENT OPTIQUE À RÉFLEXION INTERNE TOTALE ET DISPOSITIF DE MESURE DE RÉFLEXION INTERNE TOTALE COMPRENANT CE DERNIER

(30) Priority: 19.04.2017 JP 2017082586
(43) Date of publication of application: 26.02.2020
(73) Proprietor: Jasco Corporation, Hachioji-shi Tokyo 192-8537 (JP)
(72) Inventor: KOSHOBU, Jun, Hachioji-shi Tokyo 192-8537 (JP); SOGA, Noriaki, Hachioji-shi Tokyo 192-8537 (JP); SUGIYAMA, Hiroshi, Hachioji-shi Tokyo 192-8537 (JP)
(74) Representative: Henkel & Partner mbB
(86) International application number: PCT/JP2018/015153
(87) International publication number: WO 2018/193924

(56) References cited:
- JP-A- H01 321 342
- JP-A- S56 140 304
- JP-A- 2000 111 474
- US-A- 5 835 231
- US-A1- 2015 144 776
- US-B1- 6 887 430

## Description

### FIELD OF THE INVENTION

The present invention relates to a total reflection optical member (also referred to as a total reflection prism) and a total reflection measuring device, and particularly to miniaturization and improvement in sensitivity of the total reflection optical member.

### BACKGROUND OF THE INVENTION

Analyzing devices such as Fourier transform infrared spectrophotometers (FTIR) that measure a reflected light or a transmitted light from a sample to obtain various optical data of the sample are known. In FTIR, a total reflection measuring method is applied to samples of which a reflected light measurement or a transmitted light measurement, that are the general methods, is difficult. That is, the ATR method.

In a total reflection measuring method, a total reflection prism having a greater refractive index than that of a sample is placed on the sample or the sample is placed on the total reflection prism to make a measurement light incident to the prism by a condensing lens. When the angle of incidence from the prism to the sample is made greater than the critical angle, an incident light is totally reflected at a boundary surface between the sample and the prism. At this boundary surface, the light slightly enters the sample from the prism (also referred to as penetration). Then, the light that comes back to the prism side again becomes the totally reflected light. When a portion of the light that entered the sample is absorbed by the sample, the light reflected at the boundary surface is reduced for that amount. Then, the totally reflected light is condensed by a lens. The totally reflected light at the boundary surface between the sample and the prism is analyzed to obtain optical information of the sample. Accordingly, surface analysis of polymer membranes, semiconductors or samples that show remarkably strong light absorption can be performed with a simple procedure: making the sample to come into contact with the prism.

This total reflection measuring method is suitable for analyzing a microscopic portion of a sample. There is a method that uses an infrared microspectroscopic device of which a reflective or a transmissive microscopic optical configuration is combined to FTIR configuration. For example, there is a method that adopted a Cassegrain objective mirror that retains the total reflection prism in the microscopic optical configuration.

### <Single reflection method and Multiple reflection method>

Measurement of which a measurement light is totally reflected at a contact surface between a total reflection prism and a sample for only once is referred to as a single reflection method. The contact surface with the sample of the total reflection prism used in the single reflection method can be made small, so that it is suitable for analysis of microscopic samples. However, there is a case that a peak intensity cannot be obtained sufficiently in one total reflection, and the peak tends to be buried in noises.

On the other hand, measurement of which a measurement light is totally reflected for multiple times along the direction in which the measurement light travels is referred to as a multiple reflection method. A peak intensity bigger than that of the single reflection method can be obtained, and a high sensitivity measurement becomes possible. However, most of the total reflection prisms used in conventional multiple reflection method required wide contact surfaces. Accordingly, the sample needed to be of a size that is equivalent to or larger than the contact surface of the prism. Patent literatures 1 and 2 disclose trapezoidal total reflection prisms of which a measurement light travels backward and forward while being multiply reflected in the prism.

Patent literature 3 discloses a polygonal crystal for fluid analysis. The polygonal crystal comprises a plurality of reflective surfaces and totally internally reflects an optical beam transmitted into the polygonal crystal.

Patent literature 4 discloses an immunoassay apparatus comprising a total internal reflection prism. The number of total reflection is increased to improve the sensitivity.

### CITATION LIST

### PATENT LITERATURE

PATENT LITERATURE 1: Japanese Patent Application Publication No. JP2000-111474 A
PATENT LITERATURE 2: Japanese Patent Application Publication No. JPH11-241991 A
PATENT LITERATURE 3: US 2015/144776 A1
PATENT LITERATURE 4: US 6 887 430 B1

### DISCLOSURE OF THE INVENTION

### PROBLEM TO BE SOLVED BY THE INVENTION

As described above, a total reflection optical member needed to have a large contact area with a sample, and the sample to be measured itself needed to be big in conventional multiple reflection methods. Thus, there was a problem that small samples could not be measured in conventional multiple reflection methods.

The present invention was made in view of the above mentioned problem. The object of the present invention is to provide a total reflection optical member which can be used in a multiple reflection method and has a small contact area with a sample, and a total reflection measuring device that comprises the same.

### MEANS TO SOLVE THE PROBLEM

According to the present invention, there is provided a total reflection optical member as set out in independent claim 1, and a total reflection measuring device as set out in claim 7. Advantageous modifications are set out in the dependent claims. The total reflection optical member according to the present invention has plane parts formed perpendicularly to front and back surfaces of a plate-shaped optical member, and a measurement light that travels while being multiply reflected inside the optical member is reflected by the plane parts in different directions. The measurement light reflected at the plane part continues to travel while being totally reflected inside the optical member. In a case where at least one of the front and back surfaces of the optical member is to be the contact surface with the sample; even if the contact surface with the sample becomes smaller than that of a conventional optical member, the number of total reflection of the measurement light at the small contact surface can be secured sufficiently. When such plane parts are provided at several positions and the measurement light is reflected at respective plane part to change the direction of the measurement light for several times, a large number of total reflection on a small contact surface can be secured.

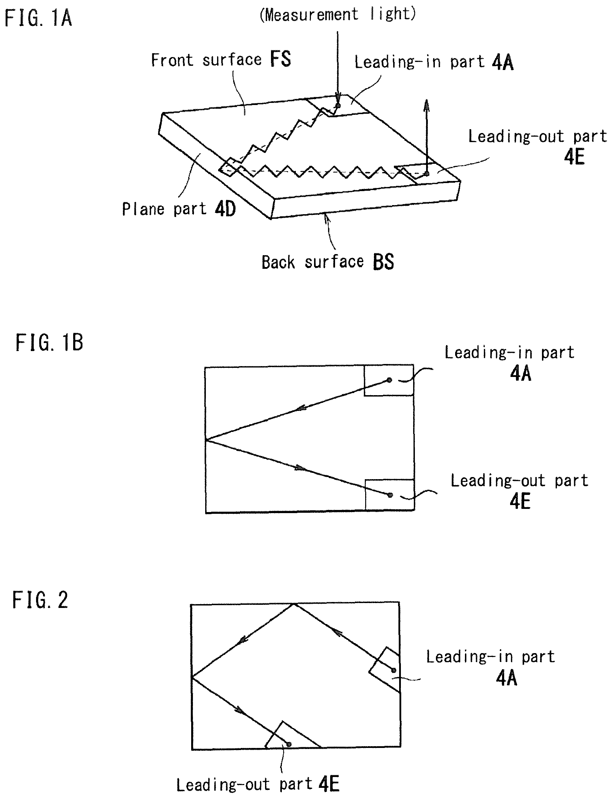

When there is one plane part 4D like in the example of Figure 1, which is not covered by the subject-matter of the claims, the direction of the measurement light that travels while being totally reflected between the front surface FS and the back surface BS of the optical member is changed once, so that limited contact surface can be efficiently used two-dimensionally and the number of total reflection of the measurement light can be secured. Figure 1B is a plan view of the plate-shaped optical member of Figure 1A, and the inner route of the measurement light from the leading-in part 4A to the leading-out part 4E is shown in a straight line with an arrow.

### <One that changes the direction of the measurement light for several times>

As shown in the example of Figure 2, which is not covered by the subject-matter of the claims, the direction of the measurement light that travels while being totally reflected inside the optical member is changed at the plurality of plane parts for each reflection. Accordingly, the number of total reflection of the measurement light can be secured and the contact surface with the sample can be used more efficiently.

### <One that the optical paths cross each other>

Among the plurality of plane parts, the plane part that reflects the measurement light secondary or after is provided so that the optical path of the measurement light that is reflected at this plane part crosses the optical path of the measurement light that traveled toward the other plane part that has reflected the measurement light precedingly.

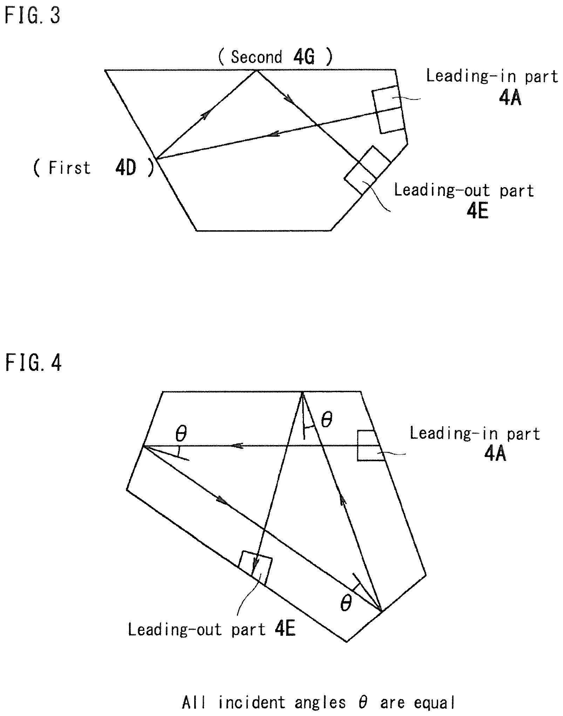

As shown in the example of Figure 3, the optical path of the measurement light that is reflected at the plane part 4G crosses the optical path that traveled toward the plane part 4D precedingly. Accordingly, a relatively long optical path can be secured even the area of the contact surface is limited.

### <One that the angles of incidence θ or the optical path lengths become the same>

As shown in the example of Figure 4, the angles between the plurality of the plane parts are set so that the measurement light is made incident at the same angles of incidence θ to any of the plane parts.

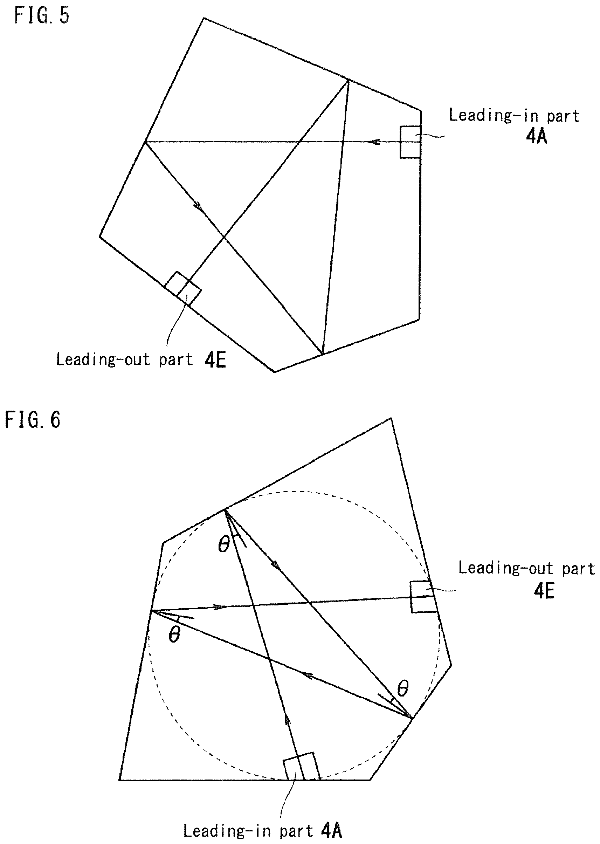

As shown in the example of Figure 5, the plurality of the plane parts are provided so that the optical path lengths in each section from the plane part that reflected the measurement light to the other plane part that subsequently reflects the measurement light become the same in any sections.

As one example, Figure 6 shows a total reflection optical member having the same angles of incidence at each plane part and the same optical paths in each section.

### <One that the trace of the optical path becomes a regular star polygon>

The plurality of plane parts is provided so that the optical path trace of the measurement light that is sequentially reflected at the plurality of plane parts becomes a regular star polygon, in particular a regular star pentagon, a regular star heptagon, a regular star octagon, or a regular star nonagon.

According to the total reflection optical member configured as such, the external shape of the optical member can be united and the travelling route of the measurement light becomes easily recognizable to the user, so that the total reflection optical member becomes easier for the user to handle.

In the total reflection optical member, metal films are formed on the surfaces other than at least one surface of the front and back surfaces, the leading-in part of the measurement light and the leading-out part of the measurement light among all of the surfaces of the total reflection optical member.

Accordingly, infrared light can be multiply reflected in the prism effectively by coating the surfaces of the prism other than the contact surface with the sample and the leading-in and leading-out parts of the infrared light in the total reflection optical member with the metal films.

### EFFECT OF THE INVENTION

According to the configuration of the total reflection optical member (total reflection prism) of the present invention, a plurality of a plane parts formed perpendicularly to front and back surfaces of the total reflection prism make the measurement light that travels while being multiply reflected inside the optical member to reflect in different directions, so that the contact surface can be effectively used two-dimensionally and the number of total reflection of the measurement light on the contact surface can be secured even if the contact surface with the sample becomes smaller than in conventional optical members. Accordingly, such total reflection prism enables a high sensitivity surface analysis of a same level or more as conventional multiple reflection methods for small samples; and a total reflection prism and a total reflection measuring device that fit for the purpose can be provided.

Compared to the conventional trapezoidal prisms of Patent Literatures 1 and 2, the total reflection prism configured as described above has a smaller ratio of the representative length with respect to the thickness of the prism, so that mechanical intensity of the total reflection prism is enhanced. As a result, the total reflection prism is hardly broken, i.e. durability is improved, and the degree of freedom of the shape of the holder that retains the total reflection prism is increased, too.

Furthermore, the leading-in optical system to the total reflection prism can be designed in a small and compact size, so that attachments for the measuring device body can be miniaturized. As a result, the measuring device becomes easier to carry, and resource-saving may become easier, too.

### BRIEF DESCRIPTION OF THE DRAWINGS

Figure 1 describes a total reflection optical member having one plane part as one unclaimed embodiment not forming part of the present invention.
Figure 2 describes a total reflection optical member having two plane parts as one unclaimed embodiment not forming part of the present invention.
Figure 3 describes a total reflection optical member that forms a crossing optical path as one embodiment of the present invention.
Figure 4 describes a total reflection optical member that forms the same angles of incidence to any of the plane parts as one embodiment of the present invention.
Figure 5 describes a total reflection optical member that forms the optical paths of the same lengths in any sections as one embodiment of the present invention.
Figure 6 describes a total reflection optical member that forms the same angles of incidence to any of the plane parts and forms the optical paths of the same lengths in any sections as one embodiment of the present invention.
Figure 7 is a plan view of a total reflection prism according to the first embodiment of the present invention.
Figure 8 is a cross-sectional view of the total reflection prism of Figure 7.
Figure 9 is a plan view of a total reflection prism according to the second embodiment of the present invention.
Figure 10 is a cross-sectional view of the total reflection prism of Figure 9.
Figure 11 is a plan view of a total reflection prism according to the third embodiment of the present invention.
Figure 12 is a plan view of a modified embodiment of the total reflection prism of Figure 11.
Figure 13 is a plan view of another modified embodiment of the total reflection prism of Figure 11.
Figure 14 shows a schematic configuration of the total reflection measuring device according to one embodiment of the present invention.

### BEST MODE FOR CARRYING OUT THE INVENTION

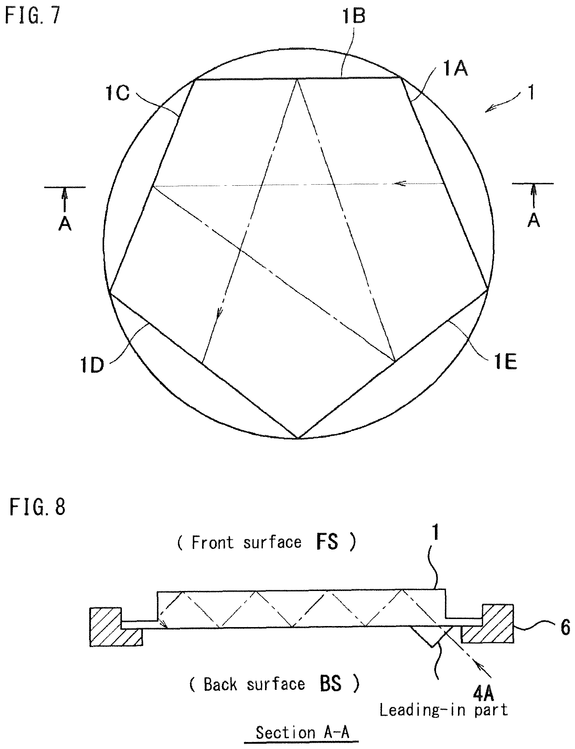

Hereinbelow, preferable embodiments of the present invention are described with reference to the figures. Figure 7 shows a configuration of a total reflection optical member (hereinafter referred to as a total reflection prism) 1 according to the first embodiment of the present invention. The total reflection prism 1 is made of a plate-shaped crystal material having a regular polygon shape such as a regular pentagon. Diamonds, ZnSe, GE and the like having a high refractive index are used as the material.

The whole shape of the prism 1 viewed in plan view like in Figure 7 is circular. For example, it may be formed by combining a regular pentagon prism, and five arc-shaped members provided to the plane parts 1A-1E at the outer periphery of the prism. Alternately, it may be an integrally formed prism, not a combined type. For example, it may be a prism of which the external shape on the front surface (contact surface) side of the plate-shaped optical member is a regular pentagon and the external shape of the back surface (support surface) side is circular. The description as stated herein is a case of the latter, an integrally formed prism.

The five plane parts 1A-1E of the regular pentagon prism are perpendicular to the front and back surfaces of the prism, respectively. A leading-in part of the measurement light, which will be described later, is provided at the back surface in the vicinity of the plane part 1A, and a leading-out part of the measurement light, which will be described later, is provided at the back surface in the vicinity of the plane part 1D.

Figure 8 shows a cross-sectional shape viewed in the direction of the arrow A in Figure 7. As shown in Figure 8, a prismatic-shaped leading-in part having a right angled triangle cross-section is formed at the back surface BS in the vicinity of the plane part 1A of the prism 1. As shown in Figure 8, the leading-in part 4A is provided at a position that is deviated from the center of the back surface BS, and leads the measurement light that comes from outside into the prism. The measurement light enters inside the prism from the leading-in part 4A, and travels at an angle of incidence greater than the critical angle toward the front surface FS. Accordingly, the measurement light travels linearly while being totally reflected at the front and back surfaces FS, BS alternately. The direction of the leading-in part 4A is provided so that the measurement light that travels inside the prism becomes parallel to the plane part 1B.

The measurement light from the leading-in part 4A eventually strikes the other plane part 1C and is totally reflected at this plane part 1C to travel in a different direction. The measurement light that is totally reflected at the plane part 1C travels linearly again while being totally reflected at the front and back surfaces FS, BS alternately. Since the prism is a regular pentagon, the angle of incidence θ to the plane part 1C is 18 degrees, and the direction of the measurement light after reflection becomes parallel to the plane part 1D.

The measurement light from the leading-in part 4A is totally reflected at the plurality of plane parts in the order of 1C, 1E, 1B in different directions, respectively, to travel inside the prism while drawing an optical path trace of a regular star pentagon. The measurement light finally exits the prism from the leading-out part formed on the back surface BS in the vicinity of the plane part 1D. Since the prism is a regular pentagon, the angles of incidence to any of the plane parts are the same, and the optical path lengths in the section from the plane part that totally reflected the measurement light to the other plane part that totally reflects the measurement light subsequently are the same in any sections, too. The leading-out part is provided in a prismatic-shape having a right angled triangle cross-section like the leading-in part in the vicinity of the plane part 1D.

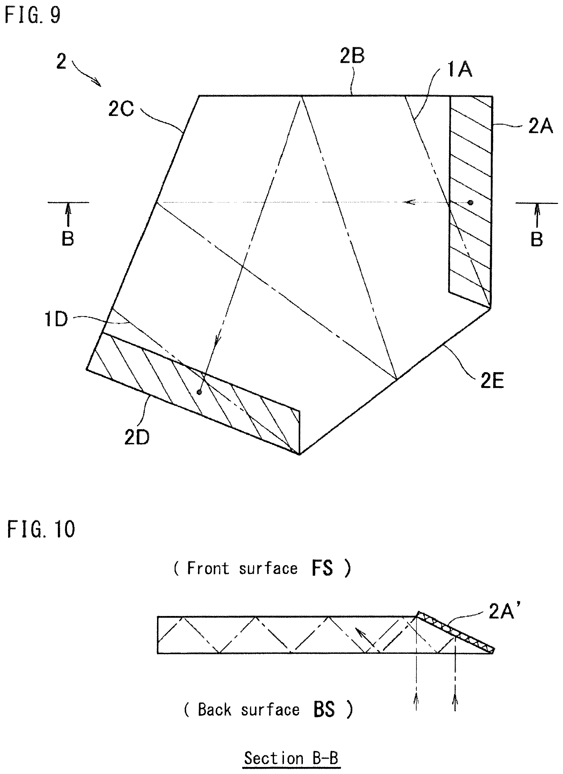

Figure 9 shows a configuration of a total reflection prism 2 according to a second embodiment of the present invention. The different points from the regular pentagon prism 1 described above are the point that the external shape is a line-symmetrical pentagon and the point that the shapes of the leading-in and leading-out parts are different; but other configurations are the same. In this prism 2, the parts that correspond to the plane parts 1A and 1D of the regular pentagon prism 1 are extended to form the leading-in part and the leading-out part. The contour of the extended part shown as 2A in Figure 9 is perpendicular to the adjacent plane part 2B. As shown in the cross-section of Figure 10, the extended part 2A is formed with an inclined plane part 2A' that is inclined to the front surface of the prism 2. This inclined plane part 2A' has a metal coating film so that the infrared light can be multiply reflected in the prism 2 effectively. The region shown with a hatching in Figure 9 is the region where the metal coating film is vapor-deposited. As shown in Figure 10, the leading-in part of the measurement light is formed in the region where the inclined plane part 2A' with the metal coating film is projected perpendicularly to the back surface of the prism. That is, the leading-in part of the measurement light is formed in one part of the region of the back surface of the prism.

Similarly, the contour of the extended part 2D in Figure 9 is perpendicular to the adjacent plane part 2C. An inclined plane part that is inclined to the front surface of the prism 2 is formed thereby, and has a metal coating film (the region shown with a hatching in Figure 9). The leading-out part of the measurement light is formed in the region where the inclined plane part formed in the extended part 2D is projected perpendicularly to the back surface of the prism.

In the example of Figure 9, the regions where the metal coating film is formed are the two inclined plane parts of the prism 2; but it is not limited thereto, and the metal coating film may be formed in the plane parts of the prism (for example, the plane parts 2B, 2C, 2E in Figure 9). The metal coating film may be formed to a surface which does not come into contact with the sample among the front and back surfaces of the prism. When the contact part with the sample is the front surface FS of the prism 2 in the example of Figure 10, the metal coating film may be formed to the parts other than the region of the leading-in part and leading-out part of the measurement light among the back surface BS of the prism 2. In the total reflection prism, the infrared light can be multiply reflected inside the prism 2 effectively by forming the metal coating film in the surface other than at least one surface of the front and back surfaces and the leading-in part and the leading-out part of the measurement light among all of the surfaces of the total reflection prism.

The measurement light enters inside the prism from the back surface BS in a direction perpendicular to the back surface BS of the prism 2 and is reflected at the inclined plane part 2A' inside. The measurement light that is reflected at the inclined plane part 2A' travels at an angle of incidence greater than the critical angle with respect to the back surface BS of the prism 2. The measurement light that entered from the leading-in part of the measurement light formed as such travels linearly in parallel with the plane part 2B while repeating total reflection between the front and back surfaces FS, BS of the prism 2 alternately, and draws an optical path trace of a regular star pentagon by totally reflecting at the plurality of the plane parts 2C, 2E, 2B sequentially, in a similar way as described above. Then, the measurement light is reflected at the inclined part formed in the extended part 2D, travels in a direction perpendicular to the back surface BS of the prism 2, and exits the prism from the back surface BS. The measurement light is made incident to the back surface BS of the prism 2 perpendicularly and exits from the back surface BS perpendicularly.

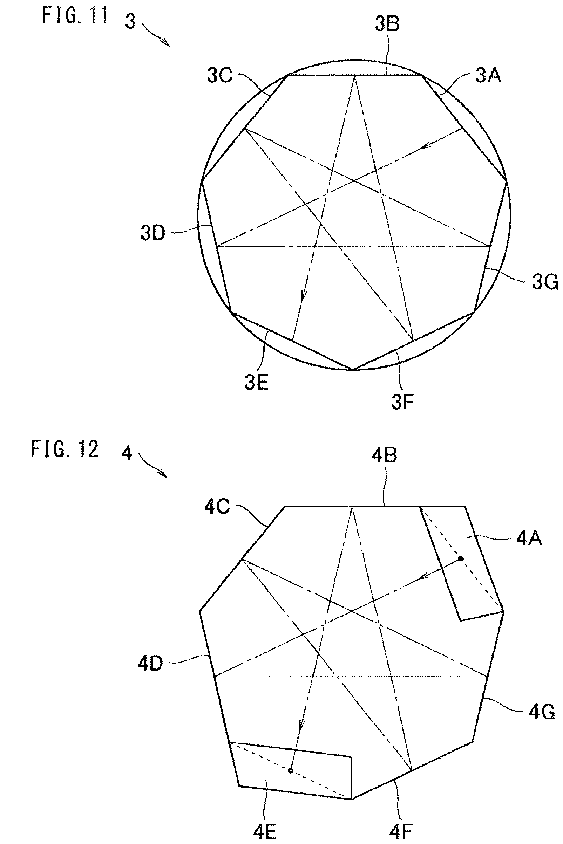

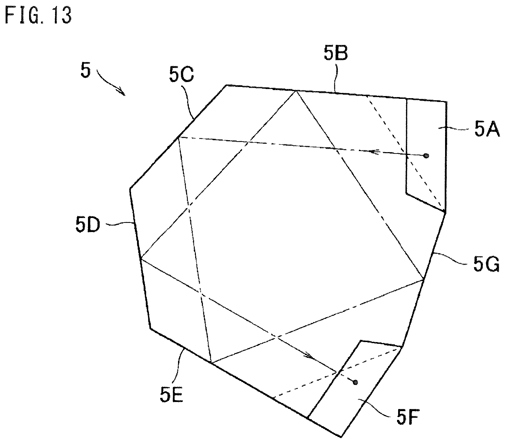

Figures 11 to 13 show the configurations of the total reflection prism according the third embodiment of the present invention. In a prism 3 of a regular heptagon in Figure 11, the measurement light draws an optical path trace of a regular star heptagon. Figures 12 and 13 show prisms that are provided with practical configurations of the leading-in parts and the leading-out parts of the measurement light in the regular heptagon prism 3. With respect to the leading-in part and the leading-out part, a prismatic-shaped member given as the example in Figure 8 may be adopted, or those that use the inclined plane parts given as the example in Figure 10 may be adopted. The leading-in parts are expressed with the reference numbers 4A, 5A and the leading-out parts are expressed with the reference numbers 4E, 5F for convenience. The difference between the total reflection prisms in Figures 12 and 13 is the point that the angles of incidence of the measurement light with respect to each plane part are different. In Figure 12, the measurement light that is reflected at the plane part travels toward the other plane part that is the third one from the said plane part, and the plane part that is the third one from the plane part 4D in anti-clockwise direction is the plane part 4G. In Figure 13, the measurement light reflected from the plane part travels toward the other plane part that is the second one from the said plane part, and the plane part that is the second one from the plane part 5C in anti-clockwise direction is the plane part 5E. Furthermore, in Figure 12, the direction of the inclined plane part is set so that the measurement light that entered the prism 4 travels in parallel to the plane part 4F. In Figure 13, the direction of the inclined plane part is set so that the measurement light that entered the prism 5 travels in parallel to the plane part 5B.

As described above, any of the total reflection prisms of each embodiment are formed such that the measurement light draws the optical path trace of a regular star polygon in one stroke. Other than the above, total reflection prisms having polygon shapes such that the measurement light draws an optical path trace of a regular star octagon or a regular star nonagon may be considered. Those that have polygon shapes ranging from a regular star hexagon to a regular star nonagon are preferable as practical examples.

The number of total reflection can be at maximum of 50 times or more by the total reflection prisms of these embodiments, and a total reflection prism that can perform reflection for many times and has a high sensitivity can be obtained. A high sensitive measurement of microscopic samples becomes possible since the measurement light can be multiply reflected in a small prism area.

Furthermore, in a case where either surface of the front and back surfaces of the prism is to be the contact surface with the sample and the other is to be the prism supporting surface, the total reflection prism can be retained by the supporting configuration of directly supporting the prism supporting surface. Sealability between the prism holder 6 can be easily maintained by the circular external shape like the total reflection prism 1 in Figure 7. Positional relationship between the total reflection prism 1 and the prism holder 6 is shown in Figure 8. The member shown with a hatching in Figure 8 is the prism holder 6.

Furthermore, the pressing pressure of the sample can be made larger since the prism area is small and the prism can be directly supported at the prism supporting surface. Not only liquid samples, but also solid and powder samples can be measured.

In the total reflection prisms of these embodiments, mechanical strength of the total reflection prism is enhanced since the ratio of the representative length with respect to the thickness of the prism becomes smaller compared to the conventional trapezoidal prisms in Patent Literatures 1 and 2. As a result, the total reflection prism is hardly broken, i.e. durability is improved, and the degree of freedom of the shape of the prism holder that retains the total reflection prism is increased, too.

Moreover, the leading-in optical system to the total reflection prism can be designed in a small and compact size, so that attachments for the measuring device body can be miniaturized. As a result, the measuring device becomes easier to carry, and resource saving becomes easier, too.

The total reflection prism of which a part that has small effect on reflection of the measurement light is formed with a curved surface in one part of the outer periphery can achieve similar effect, too.

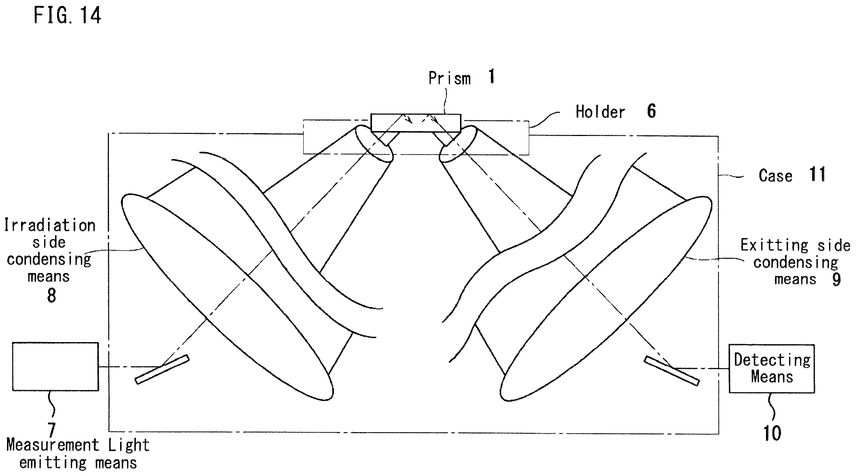

Figure 14 shows one example of a total reflection measuring device that applied the total reflection prism 1 of the present invention. The total reflection measuring device comprises: a measurement light emitting means 7; an irradiation side condensing means 8 that condenses the measurement light from the measurement light emitting means 7 to a total reflection prism 1 like Figure 7; a prism holder 6; an exiting side condensing means 9 that condenses the measurement light from the total reflection prism 1; a detecting means 10 that detects the measurement light; and a case 11.

The total reflection prism 1 shown in Figure 14 is a microscopic prism having a thickness of about 0.5 mm and a diameter of about 3 mm, and is retained by the prism holder 6 so that the sample can be placed on the front surface. The condensing means 8 on the irradiation side condenses the measurement light at a suitable cross-section area toward the leading-in part of the microscopic prism.

### INDUSTRIAL APPLICABILITY

The total reflection optical member of the present invention can be widely applied to spectrum measuring devices such as FTIR and CD.

### DESCRIPTION OF REFERENCE NUMBERS

- 1, 2, 3, 4, 5: Total reflection prism (total reflection optical member)
- 1A-1E: Plane part
- 2A, 2D: Extended part
- 2B, 2C, 2E: Plane part
- 2A': Inclined plane part
- 3A-3G: Plane part
- 4A, 5A: Leading-in part of the measurement light
- 4B-4D, 4F, 4G: Plane part
- 4E, 5F: Leading-out part of the measurement light
- 5B-5E, 5G: Plane part

## Claims

1. A total reflection optical member (2) made of a plate-shaped optical member, comprising:
a leading-in part (2A) and a leading-out part (2D) of a measurement light provided at positions deviated from a center of either surface of front and back surfaces of the optical member (2);
a plurality of plane parts (2B, 2C, 2E) formed perpendicularly to the front and back surfaces of the optical member (2) respectively at an outer periphery other than the front and back surfaces of the optical member (2),
wherein the leading-in part (2A) is provided to make the measurement light that is configured to be led inside the optical member (2) incident toward either surface of the front and back surfaces of the optical member (2) at an angle of incidence of total reflection,
the front and back surfaces of the optical member (2) are provided to make the measurement light travel while totally reflecting the same alternately,
the plurality of plane parts (2B, 2C, 2E) is provided to sequentially reflect the measurement light that is configured to travel inside the optical member in a different direction, and
the leading-out part (2D) is configured to lead out the measurement light that is reflected at the plurality of plane parts (2B, 2C, 2E) to outside,
**characterized in that**
among the plurality of plane parts (2B, 2C, 2E), the plane part that reflects the measurement light secondary or after is provided so that an optical path of the measurement light that is reflected at the plane part is configured to cross the optical path of the measurement light that traveled toward the other plane part that has reflected the measurement light precedingly when the optical paths are projected onto the planes of the front and back surfaces of the optical member (2).

2. The total reflection optical member (2) according to claim 1,
wherein angles between the plurality of the plane parts (2B, 2C, 2E) are set so that the measurement light is made incident at the same angles of incidence to any of the plane parts.

3. The total reflection optical member (2) according to claim 1 or 2,
wherein the plurality of the plane parts (2B, 2C, 2E) is provided so that optical path lengths in each section from the plane part that reflected the measurement light to the other plane part that subsequently reflects the measurement light become the same in any sections.

4. The total reflection optical member (2) according to claim 1,
wherein the plurality of plane parts (2B, 2C, 2E) is provided so that an optical path trace of the measurement light that is sequentially reflected at the plurality of plane parts (2B, 2C, 2E) becomes a regular star polygon when the optical paths are projected onto the planes of the front and back surfaces of the optical member (2).

5. The total reflection optical member (2) according to claim 4,
wherein the regular star polygon is a regular star pentagon, a regular star heptagon, a regular star octagon, or a regular star nonagon.

6. The total reflection optical member (2) according to any one of claims 1 to 5, further comprising:
metal films formed on the surfaces other than at least one surface of the front and back surfaces of the optical member (2), the leading-in part (2A) of the measurement light and the leading-out part (2D) of the measurement light among all of the surfaces of the total reflection optical member (2) .

7. A total reflection measuring device, comprising:
the total reflection optical member (2) according to any one of claims 1 to 6;
a holder (6) that is configured to retain the total reflection optical member (2) such that at least one surface of the front and back surfaces of the total reflection optical member (2) becomes into contact with a sample;
a measurement light emitting means (7) that is configured to emit the measurement light and to lead the measurement light to the leading-in part (2A) of the total reflection optical member (2); and
a detecting means (10) that is configured to detect the measurement light from the leading-out part (2D) of the total reflection optical member (2).

## Patentansprüche

1. Ein optisches Totalreflexionselement (2), das aus einem plattenförmigen optischen Element hergestellt ist, aufweisend:
ein einführendes Teil (2A) und ein herausführendes Teil (2D) von einem Messlicht, bereitgestellt an Positionen, die von einer Mitte beider Oberflächen von Vorder- und Rückoberflächen des optischen Elements (2) abweichen;
eine Vielzahl von ebenen Teilen (2B, 2C, 2E), die senkrecht zu den Vorder- und Rückoberflächen des optischen Elements (2) jeweils an einem Außenumfang ausgebildet sind, der von den Vorder- und Rückoberflächen des optischen Elements (2) verschieden ist,
wobei das einführende Teil (2A) vorgesehen ist, um zu bewirken, dass das Messlicht, das konfiguriert ist, um in das Innere des optischen Elements (2) geführt zu werden, in Richtung beider Oberflächen der Vorder- und Rückoberflächen des optischen Elements (2) mit einem Einfallswinkel einer Totalreflexion einfällt,
die Vorder- und Rückoberflächen des optischen Elements (2) vorgesehen sind, um zu bewirken, dass sich das Messlicht fortpflanzt, während dasselbe unter Totalreflexion alterniert,
die Vielzahl von ebenen Teilen (2B, 2C, 2E) vorgesehen ist, um das Messlicht, das konfiguriert ist, um sich im Inneren des optischen Elements in einer unterschiedlichen Richtung fortzupflanzen, sequenziell zu reflektieren, und
das herausführende Teil (2D) konfiguriert ist, um das Messlicht, das an der Vielzahl von ebenen Teilen (2B, 2C, 2E) reflektiert ist, nach außen herauszuführen,
**dadurch gekennzeichnet, dass**
unter der Vielzahl von ebenen Teilen (2B, 2C, 2E) das ebene Teil, das das Messlicht sekundär oder danach reflektiert, so vorgesehen ist, dass ein optischer Pfad des Messlichts, das an dem ebenen Teil reflektiert, konfiguriert ist, um den optischen Pfad des Messlichts, das sich in Richtung des anderen ebenen Teils fortgepflanzt hat, das das Messlicht zuvor reflektiert hat, zu kreuzen, wenn die optischen Pfade auf die Ebenen der Vorder- und Rückoberflächen des optischen Elements (2) projiziert werden.

2. Das optische Totalreflexionselement (2) nach Anspruch 1,
wobei Winkel zwischen der Vielzahl der ebenen Teile (2B, 2C, 2E) so eingestellt sind, dass bewirkt wird, dass das Messlicht unter demselben Einfallswinkel auf irgendeines der ebenen Teile einfällt.

3. Das optische Totalreflexionselement (2) nach Anspruch 1 oder 2,
wobei die Vielzahl der ebenen Teile (2B, 2C, 2E) so vorgesehen ist, dass optische Pfadlängen in jedem Abschnitt von dem ebenen Teil, das das Messlicht auf das andere ebene Teil reflektiert hat, das danach das Messlicht reflektiert, in jedem Abschnitt gleich werden.

4. Das optische Totalreflexionselement (2) nach Anspruch 1,
wobei die Vielzahl von ebenen Teilen (2B, 2C, 2E) so vorgesehen ist, dass eine optische Pfadspur des Messlichts, das an der Vielzahl von ebenen Teilen (2B, 2C, 2E) sequenziell reflektiert wird, zu einem regelmäßigen Sternpolygon wird, wenn die optischen Pfade auf die Ebenen der Vorder- und Rückoberflächen des optischen Elements (2) projiziert werden.

5. Das optische Totalreflexionselement (2) nach Anspruch 4,
wobei das regelmäßige Sternpolygon ein regelmäßiges Sternpentagon, ein regelmäßiges Sternheptagon, ein regelmäßiges Sternoktagon oder ein regelmäßiges Sternnonagon ist.

6. Das optische Totalreflexionselement (2) nach einem der Ansprüche 1 bis 5, ferner aufweisend:
Metallfilme, die auf den Oberflächen ausgebildet sind, die von mindestens einer Oberfläche der Vorder- und Rückoberflächen des optischen Elements (2), des einführenden Teils (2A) des Messlichts und des herausführenden Teils (2D) des Messlichts unter allen Oberflächen des optischen Totalreflexionselements (2) verschieden sind.

7. Eine Totalreflexionsmessvorrichtung, aufweisend:
das optische Totalreflexionselement (2) nach einem der Ansprüche 1 bis 6;
einen Halter (6), der konfiguriert ist, um das optische Totalreflexionselement (2) derart aufzubewahren, dass mindestens eine Oberfläche der Vorder- und Rückoberflächen des optischen Totalreflexionselements (2) mit einer Probe in Kontakt kommt;
eine Messlicht-Emittierungseinrichtung (7), die konfiguriert ist, um das Messlicht zu emittieren und das Messlicht zu dem einführenden Teil (2A) des optischen Totalreflexionselements (2) zu führen; und
eine Erfassungseinrichtung (10), die konfiguriert ist, um das Messlicht von dem herausführenden Teil (2D) des optischen Totalreflexionselements (2) zu erfassen.

## Revendications

1. Élément optique à réflexion totale (2) constitué d'un élément optique en forme de plaque, comprenant :
une partie d'entrée (2A) et une partie de sortie (2D) d'une lumière de mesure prévue à des positions déviées d'un centre de l'une ou l'autre surface des surfaces avant et arrière de l'élément optique (2) ;
une pluralité de parties planes (2B, 2C, 2E) formées perpendiculairement aux surfaces avant et arrière de l'élément optique (2), respectivement au niveau d'une périphérie externe autre que les surfaces avant et arrière de l'élément optique (2),
dans lequel la partie d'entrée (2A) est prévue pour rendre la lumière de mesure qui est configurée pour être dirigée à l'intérieur de l'élément optique (2) incidente vers l'une ou l'autre surface des surfaces avant et arrière de l'élément optique (2) selon un angle d'incidence de réflexion totale,
les surfaces avant et arrière de l'élément optique (2) sont prévues pour déplacer la lumière de mesure tout en la réfléchissant totalement en alternance,
la pluralité de parties planes (2B, 2C, 2E) est prévue pour réfléchir séquentiellement la lumière de mesure qui est configurée pour se déplacer à l'intérieur de l'élément optique dans une direction différente, et la partie de sortie (2D) est configurée pour faire sortir la lumière de mesure qui est réfléchie au niveau de la pluralité de parties planes (2B, 2C, 2E) vers l'extérieur,
**caractérisé en ce que**
parmi la pluralité de parties planes (2B, 2C, 2E), la partie plane qui réfléchit la lumière de mesure secondairement ou ultérieurement est prévue de sorte qu'un chemin optique de la lumière de mesure qui est réfléchie au niveau de la partie plane soit configuré pour traverser le chemin optique de la lumière de mesure qui s'est déplacée vers l'autre partie plane qui a réfléchi la lumière de mesure précédemment lorsque les chemins optiques sont projetés sur les plans des surfaces avant et arrière de l'élément optique (2).

2. Élément optique à réflexion totale (2) selon la revendication 1,
dans lequel les angles entre la pluralité de parties planes (2B, 2C, 2E) sont réglés de sorte que la lumière de mesure soit rendue incidente selon les mêmes angles d'incidence sur l'un quelconque des parties planes.

3. Élément optique à réflexion totale (2) selon les revendications 1 ou 2,
dans lequel la pluralité de parties planes (2B, 2C, 2E) est prévue de sorte que les longueurs de chemins optiques dans chaque section depuis la partie plane qui a réfléchi la lumière de mesure jusqu'à l'autre partie plane qui réfléchit ensuite la lumière de mesure deviennent les mêmes dans toutes les sections.

4. Élément optique à réflexion totale (2) selon la revendication 1,
dans lequel la pluralité de parties planes (2B, 2C, 2E) est prévue de sorte qu'un tracé de chemin optique de la lumière de mesure qui est réfléchie séquentiellement au niveau de la pluralité de parties planes (2B, 2C, 2E) devient un polygone régulier étoilé lorsque les chemins optiques sont projetés sur les plans des surfaces avant et arrière de l'élément optique (2).

5. Élément optique à réflexion totale (2) selon la revendication 4,
dans lequel le polygone régulier étoilé est un pentagone régulier étoilé, un heptagone régulier étoilé, un octogone régulier étoilé, un nonagone régulier étoilé.

6. Élément optique à réflexion totale (2) selon l'une quelconque des revendications 1 à 5, comprenant en outre :
des films métalliques formés sur les surfaces autres qu'au moins une surface des surfaces avant et arrière de l'élément optique (2), la partie d'entrée (2A) de la lumière de mesure et la partie de sortie (2D) de la lumière de mesure parmi toutes les surfaces de l'élément optique à réflexion totale (2).

7. Dispositif de mesure de réflexion totale, comprenant :
l'élément optique à réflexion totale (2) selon l'une quelconque des revendications 1 à 6 ;
un support (6) qui est configuré pour retenir l'élément optique à réflexion totale (2) de sorte qu'au moins une surface des surfaces avant et arrière de l'élément optique à réflexion totale (2) entre en contact avec un échantillon ;
un moyen d'émission de lumière de mesure (7) qui est configuré pour émettre la lumière de mesure et pour diriger la lumière de mesure vers la partie d'entrée (2A) de l'élément optique à réflexion totale (2) ; et
un moyen de détection (10) qui est configuré pour détecter la lumière de mesure provenant de la partie de sortie (2D) de l'élément optique à réflexion totale (2).
